# EUROPÄISCHE PATENTSCHRIFT

(11) **EP 2 476 917 B1**
(45) Veröffentlichungstag und Bekanntmachung des Hinweises auf die Patenterteilung: **13.07.2016**
(21) Anmeldenummer: 12151342.8
(22) Anmeldetag: 17.01.2012
(51) Int. Cl.: F16B 7/04, B60R 1/00

(54) **System zur Verbindung von zwei Bauteilen, Haltebock hierfür, sowie Spiegelanordnung für Kraftfahrzeuge hiermit**
System for connecting two components, hanger bracket for same, and mirror assembly for motor vehicles with same
Système de liaison de deux composants, support de maintien associé ainsi qu'agencement de miroir pour véhicules automobiles en étant équipés

(30) Priorität: 17.01.2011 DE 102011002787; 31.08.2011 DE 102011081902
(43) Veröffentlichungstag der Anmeldung: 18.07.2012
(73) Patentinhaber: MEKRA Lang GmbH & Co. KG, 91465 Ergersheim (DE)
(72) Erfinder: Reimchen, Richard, 91522 Ansbach (DE); Denkfelder, Jochen, 91710 Gunzenhausen (DE); Popp, Albrecht, 91629 Weihenzell (DE)
(74) Vertreter: Winter, Brandl, Fürniss, Hübner, Röss, Kaiser, Polte - Partnerschaft mbB

(56) Entgegenhaltungen:
- DE-A1- 2 535 458
- DE-A1- 2 950 742
- DE-U1- 9 310 437
- GB-A- 2 065 259

## Beschreibung

Die Erfindung betrifft ein System zur Verbindung von zwei Bauteilen, einen Halte-bock für ein derartiges System, sowie eine Spiegelanordnung für Kraftfahrzeuge mit einem derartigen System.

Bei der Verbindung zweier Bauteile, von den wenigstens eines rohr- oder hülsenförmig ist und welche zur Verbindung über einen gewissen Teilbetrag ihrer jeweiligen Längserstreckung ineinander gesteckt werden, besteht in der Praxis oftmals die Anforderung, diese Steckverbindung nicht lose, sondern gesichert im Sinne einer verdreh- und verstellfesten Lagefixierung der beiden Bauteile zueinander auszulegen. Der Anforderung nach einer Verdrehsicherung kann besonders einfach dadurch nachgekommen werden, dass die beiden Bauteile keine rund/komplementären Querschnitte, sondern eckig/komplementäre, insbesondere viereckig/komplementäre Querschnitte (z.B. in Form von Vierkantrohren oder -stutzen) erhalten. Nach einem Ineinanderstecken der beiden Bauteile mit den entsprechenden Querschnitten ist - von einem gewissen Spiel abgesehen - eine im Wesentlichen verdrehfeste Lagebeziehung der beiden Bauteile zueinander erhalten.

Zur Sicherung von axialen Relativbewegungen der beiden Bauteile zueinander ist aus der Praxis eine Vielzahl von Verbindungstechniken bekannt, beispielsweise Schraub- oder Steckbolzen, welche in den Wandungen der beiden Bauteile ausgebildete und miteinander fluchtende Bohrungen durchsetzen, Schnapp- oder Rastverbindungen mit unter Federspannung stehenden Rastelementen an einem Bauteil, welche in komplementäre Rastvertiefungen am anderen Bauteil eingreifen, etc. Des Weiteren ist es übliche Praxis, zwei ineinander gesteckte Bauteile durch eine Punkt- oder Längsschweißnaht, eine punkt- oder flächenförmige Verklebung oder dergleichen miteinander zu verbinden.

Die beiden letztgenannten Möglichkeiten haben den Nachteil, dass eine Trennung der beiden Bauteile auf zerstörungsfreie Weise in der Regel nicht mehr gegeben ist.

Bolzen oder Splinte, welche miteinander in Fluchtung befindliche Bohrungen in den beiden Bauteilen durchsetzen, müssen ihrerseits gesichert werden (Schraubbolzen, Federringsicherungen etc.) und sehen oftmals aufgrund der vom Außenumfang der ineinander gesteckten Bauteile vorstehenden Bolzen- oder Splintendabschnitte unansehnlich aus. Kugelverrastungen oder dergleichen haben oftmals nur geringe Haltekräfte und sind zudem aufwendig und damit teuer.

Aus der DE 60025104T2 bzw. EP1086855B1 ist ein System zur Verbindung von zwei Bauteilen bekannt, das ein erstes Verbindungselement in Form eines einseitig offenen, rohrförmigen Stutzens und ein zweites Verbindungselement in Form eines in den rohrförmigen Stutzen mit Spiel einführbaren Haltebocks umfasst. In dem Stutzen ist eine erste Anlagefläche und eine erste Nut vorgesehen. Der Haltebock umfasst einen Grundkörper, an dem ein erster Haltezapfen zum Eingriff in die erste Nut und eine in Einführrichtung hinter dem ersten Haltezapfen angeordnete Führungsfläche vorgesehen ist, wobei die Führungsfläche der ersten Anlagefläche zugeordnet und zu dieser in spitzem Winkel geneigt ist. Durch eine Klemmeinrichtung, die bei Betätigung gegen eine erste Druckfläche auf den Grundkörper drückt, damit die geneigte Führungsfläche gegen die erste Anlagefläche drückt und damit den Haltebock in dem Stutzen verkantet.

Aus der DE 25 35 458 A1 ist ein System zur formschlüssigen Verbindung von zwei übereinander schiebbaren Teilen bekannt, bei dem ein Verbindungselement mit einem Steg zwischen den beiden Teilen geführt und gehalten wird. Dabei wird das Verbindungselement in einer Ausnehmung eines der beiden Teile aufgenommen, so dass Vorsprünge des Verbindungselements in Nuten des zweiten Teils einschnappen.

Aus der GB 2 065 259 A ist ein Verbindungssystem aus dem Gerüstbau bekannt, bei dem ein erstes Teil in ein rohrförmiges, zweites Element eingeschoben und darin verklemmt wird.

Aus dem DE 93 10 437.5 U1 ist eine Rohrverbindung bekannt, bei der zwei koaxial ineinander schiebbare Rohre bzw. Rohrenden über ein im inneren Rohr liegendes, verschwenkbares Klemmteil miteinander verbunden werden. Das Klemmteil ist nach Art einer Wippe gelagert und an einem Ende mit einer Spannvorrichtung, z.B. einer Schraube mit Druck beaufschlagbar. Das andere, freie Ende des Klemmteils schiebt sich hierdurch durch eine Öffnung in der Umfangswand des inneren Rohrs über dessen Außenumfang hinaus nach außen und drückt gegen die Innenwand des äußeren Rohrs.

Die DE 29 50 742 A1 zeigt eine Rohrverbindung, welche im wesentlichen funktionsgleich mit derjenigen gemäß der DE 93 10 437.5 U1 ist, nur dass hier auf das beaufschlagte Ende des wippenartigen Klemmteils kein Druck, sondern Zug ausgeübt wird.

Die vorliegende Erfindung hat es sich dem gegenüber zur Aufgabe gemacht, ein in Frage stehendes System zur Verbindung von zwei Bauteilen zu schaffen, mit dem die beiden Bauteile mit geringem montagetechnischem Aufwand und in einer ästhetisch überzeugenden Weise sicher gegeneinander lagefixiert werden können.

Zur Lösung dieser Aufgabe schlägt die vorliegende Erfindung gemäß einem ersten Aspekt - Anspruch 1 - ein System zur Verbindung von zwei Bauteilen vor, mit einem ersten Bauteil mit einem zumindest einseitig offenen, rohrförmigen Stutzen, wobei in dem Stutzen eine erste Anlagefläche und eine erste Nut vorgesehen ist, einem zweiten Bauteil mit einem in den rohrförmigen Stutzen mit Spiel einführbaren Haltebock, wobei der Haltebock einen Grundkörper umfasst, wobei an dem Grundkörper ein erster Haltezapfen zum Eingriff in die erste Nut und eine in Einführrichtung hinter dem ersten Haltezapfen angeordnete Führungsfläche vorgesehen ist, wobei die Führungsfläche der ersten Anlagefläche zugeordnet und zu dieser in spitzem Winkel geneigt ist, und einer Klemmeinrichtung mit einer Schraube, welche den Stutzen an der der ersten Anlagefläche gegenüberliegenden Seite durchsetzt und eine erste Druckfläche auf dem Grundkörper des Haltebocks derart kontaktiert, dass bei Betätigung der Schraube die geneigte Führungsfläche gegen die erste Anlagefläche gedrückt und damit der Haltebock in dem Stutzen verkantet wird.

Gemäß einem zweiten Aspekt der Erfindung - Anspruch 8 - wird ein System zur Verbindung von zwei Bauteilen bereitgestellt, mit einem ersten Bauteil mit einem zumindest einseitig offenen, rohrförmigen Stutzen, wobei auf der Innenseite des Stutzens eine erste Anlagefläche und eine erste Nut und der ersten Anlagefläche gegenüberliegend eine zweite Anlagefläche vorgesehen ist, einem zweiten Bauteil mit einem in den rohrförmigen Stutzen mit Spiel einführbaren Haltebock, wobei der Haltebock einen Grundkörper umfasst, wobei an dem Grundkörper ein erster Haltezapfen zum Eingriff in die erste Nut und eine vorzugsweise in Einführrichtung hinter dem ersten Haltezapfen angeordnete Führungsfläche vorgesehen ist, wobei die Führungsfläche der ersten Anlagefläche zugeordnet ist und wobei die Führungsfläche zu der ersten Anlagefläche beim Einführen des Haltebocks in den Stutzen in spitzem Winkel geneigt ist, und einer Klemmeinrichtung, die eine Klemmschraube mit einem Schraubkopf und einem Schraubfuß umfasst, der in einem Schraubloch in dem Grundkörper des Haltebocks angeordnet ist, wobei der Schraubfuß bei Betätigung der Klemmschraube gegen die zweite Anlagefläche in dem Stutzen drückt, die geneigte Führungsfläche gegen die erste Anlagefläche drückt und damit den Haltebock in dem Stutzen verkantet, wobei die Klemmeinrichtung durch eine Eingriffsöffnung betätigbar ist, die den Stutzen im Bereich der ersten Anlagefläche durchsetzt.

Die beiden Aspekte der Erfindung - Anspruch 1 und Anspruch 8 - unterscheiden sich damit lediglich hinsichtlich der Ausgestaltung der Klemmeinrichtung, das Grundprinzip des Verkantens des zweiten Verbindungselements - Haltebock - in dem ersten Verbindungselement - rohrförmiger Stutzen - bleibt gleich.

Beim Gegenstand der vorliegenden Erfindung werden somit die beiden Bauteile in an sich bekannter Weise teleskopartig über einen bestimmten Längenbetrag ineinander geschoben oder gesteckt. Nach Erreichen der gewünschten Einführ- oder Einstecktiefe wird das sich in dem ersten Verbindungselement mit Spiel befindliche zweite Verbindungselement durch Einwirkung der Klemmeinrichtung an die erste Anlagefläche des ersten Verbindungselements gedrückt. Da die der ersten Anlagefläche zugeordnete Führungsfläche zu der ersten Anlagefläche in einem spitzen Winkel geneigt ist, also Führungsfläche und erste Anlagefläche zwischen sich einen spitzen Winkel einschließen, wird letztlich das zweite Verbindungselement, das sich mit Spiel in dem ersten Verbindungselement befindet, relativ zu diesem und in diesem schräg gestellt und damit verkantet. Durch diese Verkantung ergibt sich eine Kanten- oder Linienpressung zwischen den beiden Bauteilen und damit eine Lagefixierung der beiden Bauteile zueinander, welche ein Auseinanderziehen der beiden Bauteile in Axialrichtung zuverlässig verhindert.

Bei dem erfindungsgemäßen System müssen somit nicht, wie beispielsweise im Stand der Technik bekannt, Bohrungen in den beiden Bauteilen miteinander in Fluchtung gebracht und von einem gemeinsamen Bolzen oder Splint durchsetzt werden. Weiterhin sind aufwändige und kostenintensive Rastmechanismen entbehrlich. Bei einer entsprechenden konstruktiven Auslegung der Klemmeinrichtung gibt es keine Bauteile die wesentlich vom Außenumfang des ersten Verbindungselements, also des außen liegenden Bauteils vorstehen, so dass mit dem erfindungsgemäßen Verbindungssystem auch ästhetisch ansprechende Verbindungen möglich sind.

Das erfindungsgemäße Verbindungssystem erlaubt - zumindest in einem gewissen Bereich - stufenlose Einstell- oder Nachjustierarbeiten zwischen den beiden Bauteilen, da keine festgelegte diskrete Rasterung in Form von Lochungen oder Rastvertiefungen vorliegt, sondern eine zwischen den beiden Bauteilen an beliebiger Stelle hervorrufbare Verkantung und damit Verklemmung.

Gegenstand der vorliegenden Erfindung ist weiterhin ein in dem erfindungsgemäßen Verbindungssystem zur Anwendung kommender Haltebock mit einem Grundkörper, einem an dem Grundkörper angeformten ersten Haltezapfen zum Eingriff in eine erste zugehörige Nut; zwei parallel zueinander verlaufenden, (in Einführrichtung des zweiten Verbindungselements in das erste Verbindungselement) hinter dem ersten Haltezapfen angeordneten, unterschiedlich hohen Führungsleisten; und einer ersten Druckfläche, die auf der dem Führungsleisten gegenüberliegenden Seite des Grundkörpers ausgebildet ist.

In einer besonders bevorzugten, jedoch nicht ausschließlichen Anwendung kann das erfindungsgemäße Verbindungssystem in einer Spiegelanordnung für Kraftfahrzeuge, insbesondere einer Außenspiegelanordnung zur Anwendung gelangen, mit einer Tragstruktur, an dessen einem Ende wenigstens ein Spiegelkopf und an dessen anderem Ende wenigstens ein Haltebock gemäß der vorliegenden Erfindung vorgesehen ist.

Die geneigte Führungsfläche ist bevorzugt durch zwei parallel zueinander verlaufende, in Einführrichtung des zweiten Verbindungselements in das erste Verbindungselement hinter dem ersten Haltezapfen angeordneten, unterschiedlich hohen Führungsleisten ausgebildet. Dies ermöglicht unter anderen eine fertigungstechnisch besonders einfache Möglichkeit, wie die geneigte Führungsfläche ausgebildet werden kann: je nach Höhenunterschied zwischen den freien Endflächen der beiden Führungsleisten ist der zwischen der ersten Anlagefläche und der Führungsfläche eingeschlossene Winkel mehr oder weniger spitz; die erforderliche Verkantung und die hieraus resultierenden Kräfte lassen sich somit besonders einfach beherrschen. Durch diese Ausgestaltung ergibt sich auch auf einfache Weise, dass bei Einführung des Haltebocks in den rohrförmigen Stutzen die Führungsfläche zu der ersten Anlagefläche quer zur Einführungsrichtung gekippt ist.

Der Haltebock umfasst bevorzugt wenigstens einen zweiten Haltezapfen, der in eine zugeordnete zweite Nut in dem Stutzen eingreift. Dies bewirkt eine zusätzliche Sicherung der beiden Bauteile zueinander. Weiterhin kann hierdurch die notwendige Einstecktiefe der beiden Bauteile ineinander begrenzt werden.

Die beiden Nuten sind aus fertigungstechnischen Gründen bevorzugt als durchgehende Öffnungen in dem Stutzen ausgebildet. Ist hierbei die zweite Nut darüber hinaus als Einkerbung in dem Stutzen ausgebildet, also nicht als eine umfangseitig vom Material des Stutzens umschlossene Durchgangsöffnung, wird das Einführen des Haltebocks in den Stutzen erleichtert.

Die Führungsfläche, welche den spitzen Winkel zur ersten Anlagefläche einnimmt, solange die Klemmeinrichtung in einem nicht klemmenden Zustand ist und die sich bei aufbringen der Klemmwirkung durch die Klemmeinrichtung im Wesentlichen vollflächig unter Verkantung der beiden Bauteile zueinander an die erste Anlagefläche anlegt, liegt bevorzugt zwischen den beiden Haltezapfen.

Der Stutzen (und damit bevorzugt auch der Haltebock) sind jeweils von viereckigem oder vierkantigen Querschnitt, wobei dann der Stutzen ein Vierkantrohr ist. Wie bereits Eingangs erläutert, ergibt sich hieraus quasi zwangsläufig eine zuverlässige Verdrehsicherung der beiden Bauteile zueinander. Bei Gewährleistung des Spiels zwischen Haltebock und Stutzen ist damit auch die Verkantung zwischen Haltebock und Stutzen und damit zwischen den beiden Bauteilen gewährleistet.

Die Klemmeinrichtung umfasst weiterhin bevorzugt ein Hubelelement mit einem ersten und einem zweiten Hebelarm, wobei der erste Hebelarm länger als der zweite Hebelarm ist und an dem längeren Hebelarm die erste Druckfläche und an dem kürzeren Hebelarm eine zweite Druckfläche ausgebildet ist. Der zweiten Druckfläche gegenüberliegend ist an dem Stutzen eine zweite Anlagefläche ausgebildet, an der sich der kürzere Hebelarm abstützen kann. Durch diese Hebelanordnung erfolgt eine Umsetzung der von der Schraube der Klemmeinrichtung aufgebrachten geradlinig verlaufenden Zustellbewegung in eine Schubbewegung unter gleichzeitiger Kraftvergrößerung.

Das Hebelelement hat bevorzugt die Grundform einer Viertelscheibe oder eines Sektors mit einer ersten und einer zweiten Schenkelkante und einer die beiden Schenkelkanten verbindenden Rundkante. Die erste Druckfläche, gegen welche die Schraube drückt, ist auf der ersten Schenkelkante nahe der Rundkante angeordnet. Die zweite Druckfläche befindet sich auf einem Vorsprung, der aus der ersten Schenkelkante nahe dem Zusammentreffen der beiden Schenkelkanten oder der Sektorspitze angeordnet ist. Die Rundkante ist in axialer Richtung gerundet und das Hebelelement ist in einer entsprechend geformten Ausnehmung in den Grundkörper beweglich angeordnet oder gelagert. Mit dieser Ausgestaltung lassen sich auf konstruktiv einfacher und mechanisch stabiler Weise hohe Zustell- bzw. Klemmkräfte und damit Haltekräfte erzielen.

In einer anderen bevorzugten Ausgestaltungsform kann die Klemmeinrichtung eine in dem Grundkörper angeordnete oder ausgebildete Druckplatte umfassen, deren dem Grundkörper abgewandete Oberfläche die erste Druckfläche definiert, welche die Schraube kontaktiert. Unabhängig von der Ausgestaltung des Grundkörpers kann somit für die Schraube eine definierte Druckfläche bereitgestellt werden, welche wiederum von der Oberfläche der Druckplatte bereitgestellt wird.

Hierbei kann die Druckplatte entweder ein separates Bauteil sein, welches an oder in dem Rundkörper angeordnet ist oder die Druckplatte bzw. die Druckfläche wird an oder in dem Grundkörper direkt ausgebildet, beispielsweise durch eine partielle Oberflächenhärtung. Aus herstellungstechnischen Gründen dürfte in der Praxis die separate Ausbildung der Druckplatte und deren Anordnung in einer entsprechenden Aufnahmevertiefung seitens des Grundkörpers bevorzugt sein.

Wird die Druckplatte in der Aufnahmevertiefung seitens des Grundkörpers angleordnet, kann sie gegebenenfalls in einer Ebene parallel zur Längsachse des ersten Verbindungselements verkippbar sein. Diese Verkippbarkeit der Druckplatte kann unter Umständen dadurch unterstützt werden, dass eine z.B. Gegenfläche seitens des Grundkörpers, an der sich die Druckplatte abstützt, ballig/sich vorwölbend ausgebildet ist.

Weitere Einzelheiten, Aspekte und Vorteile der vorliegenden Erfindung ergeben sich besser aus der nachfolgenden Beschreibung anhand der Zeichnung.

Es zeigt:
Fig. 1 eine teilweise geschnittene Seitenansicht auf ein Verbindungssystem gemäß einer ersten Ausführungsform;
Fig. 2 eine Draufsicht auf das Verbindungssystem in Richtung des Pfeils II in Fig. 1;
Fig. 3 einen Schnitt durch das Verbindungssystem entlang Linie III-III in Fig. 1;
Fig. 4 eine Fig. 1 entsprechende Ansicht einer zweiten Ausführungsform;
Fig. 5 einen Fig. 3 entsprechenden Schnitt entlang Linie V-V in Fig. 4,
Fig. 6 eine Fig. 1 entsprechende Ansicht einer dritten Ausführungsform;
Fig. 7 eine entsprechende Draufsicht der dritten Ausführungsform, und
Fig. 8 einen Fig. 3 entsprechenden Schnitt entlang Linie V-V in Fig. 6.

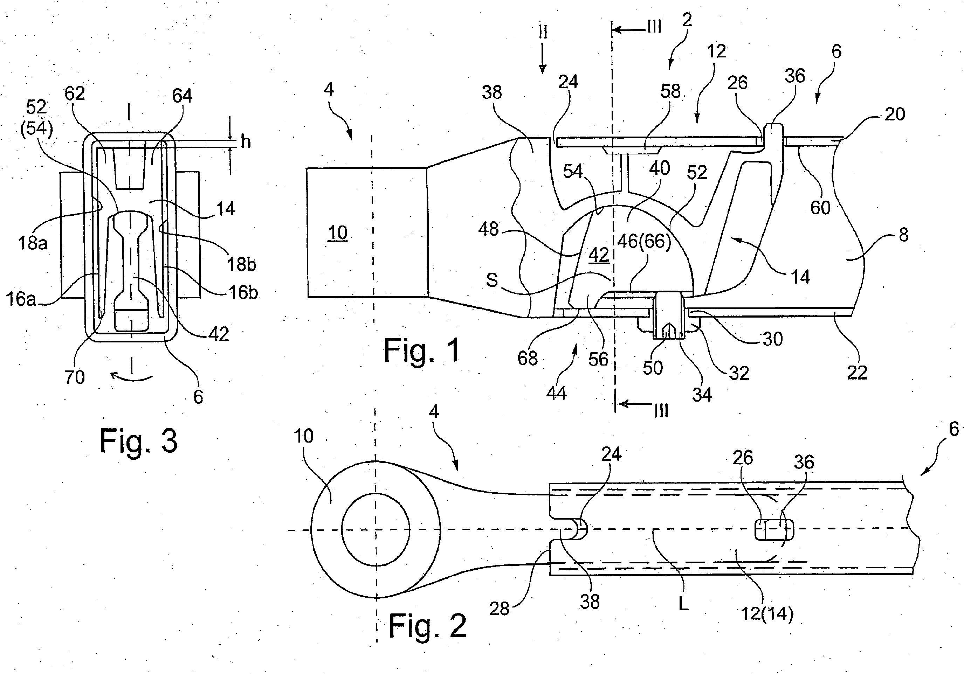

Ein in der Zeichnung insgesamt mit 2 bezeichnetes System zur Verbindung von einem ersten Bauteil 6 und einem zweiten Bauteil 4. Das in Fig. 1 auf der rechten Seite liegende erste Bauteil 6 weist einen rohrförmigen Stutzen 8 auf, der den aus Fig. 3 ersichtlichen, rechteckigen Querschnitt besitzt. Das zweite Bauteil 4, welches mit dem ersten Bauteil 6 verbindbar ist, weist ebenfalls einen rechteckigen Querschnitt auf. An seinem in den Figuren 1 und 2 linken freien Ende weist das zweite Bauteil 4 eine Aufnahme 10 auf, mittels der an dem Bauteil 4 ein weiteres Bauteil befestigbar ist.

In einer konkreten, jedoch nicht als einschränkend zu verstehenden Ausführungsform bzw. Einsatzmöglichkeit ist das erste Bauteil 6 über einen nicht näher dargestellten Spiegelfuß mit einer Fahrzeugkarosserie verbindbar und das zweite Bauteil 4 trägt über die Aufnahme 10 direkt oder indirekt einen Fahrzeugrückspiegel.

An seinem der Aufnahme 10 abgewandten Ende ist das Bauteil 4 mit einem Haltebock 12 versehen, der einen Grundkörper 14 umfasst. Dieser ist in der aus der Zeichnung ersichtlichen Weise in das hohle Innere des ersten Bauteils 6 von dessen offenem Ende her einführbar, wobei zwischen Grundkörper 14 und Bauteil 6 bzw. zwischen vertikalen Seitenwänden 16a und 16b des Grundkörpers 14 und hierzu benachbarten vertikalen inneren Seitenwänden 18a und 18b des Bauteils 6 ein gewisses Spiel vorliegt (s. Fig. 3).

Das erste Bauteil 6 weist in einer oberen Deckwand 20 zwei Öffnungen 24 und 26 auf, wobei die Öffnung 24 als ein Schlitz oder eine Einkerbung ausgebildet ist, die sich ausgehend von dem freien Rand 28 des Bauteils 6 aus in Einführrichtung des Bauteils 4 in das Bauteil 6 erstreckt. Die Öffnung 26 liegt zusammen mit der Öffnung 24 fluchtend entlang der Längsachse L des Bauteils 6 in einem bestimmten Abstand hierzu und durchbricht die Deckwand 20 in Form eines Langlochs.

In der der Deckwand 20 gegenüberliegenden Bodenwand 22 des Bauteils 6 befindet sich eine weitere Öffnung 30, welch ein Draufsicht gesehen zwischen den Öffnungen 24 und 26 liegt und in der mittels einer Muffe 32 eine Stellschraube 34 geführt ist.

Der Haltebock 12 weist einen an dem Grundkörper 14 ausgebildeten ersten Haltezapfen 36 auf, der in der aus den Figuren 1 und 2 ersichtlichen Weise in Eingriff mit der Öffnung 26 bringbar ist. Weiterhin weist der Haltebock 12 einen zweiten Haltezapfen 38 auf, der in der insbesondere aus Fig. 2 ersichtlichen Weise in Eingriff mit der Öffnung 24 bringbar ist.

In dem Grundkörper 14 des Haltebocks 12 befindet sich eine Aufnahmekammer 40, in welcher ein Hebelelement 42 angeordnet ist.

Das Hebelelement 42 ist ein Körper, der in der Seitenansicht gemäß Fig. 1 nach Art eines Tortenstücks sektorartig ausgebildet ist und zusammen mit der Stellschraube 34 eine Klemmeinrichtung 44 bildet. Das Hebelelement 42 bzw. der das Hebelelement 42 definierende Kreissektor weist eine erste Schenkelkante 46 und eine zweite Schenkelkante 48 auf. Die beiden Schenkelkanten schließen hierbei zwischen sich einen Winkel von annähernd 90° (± 20°) ein. Das einer Werkzeugöffnung 50 abgewandte Ende der Stellschraube 34 liegt in der aus Fig. 1 ersichtlichen Weise an der ersten Schenkelkante 1 an. Zwischen den beiden Schenkelkanten 46 und 48 verläuft eine bogenförmige Rundkante 52, die sich an einem entsprechend gerundeten Gegenprofil 54 abstützt, welche Teil des Grundkörpers 14 ist, der die Aufnahmekammer 40 begrenzt. Hierbei können zwischen der Rundkante 52 und dem Gegenprofil 54 zusätzliche Führungsmittel vorgesehen sein, beispielsweise eine Leiste seitens des Gegenprofils 54, die in eine entsprechende Nut seitens der Rundkante 52 (mit ausreichend Spiel, um eine später noch zu beschreibende Kippbewegung des Grundkörpers 14 relativ zum Hebelelement 42 zu gestatten) eingreift und eine Dreh- oder Schwenkbewegung des Hebelelements 42 entlang des Gegenprofils 54 um eine imaginäre Schwenkachse S gestattet.

Wo die beiden Schenkelkanten 46 und 48 mit ihren von der Rundkante 52 abgewandten Enden zusammenlaufen, also die Spitze des Kreissektors bilden, ist ein Vorsprung 56 ausgebildet, der sich mit seinem freien Ende an der Innenfläche der Bodenwand 22 bzw. abstützt. Das freie Ende des Vorsprungs 56 ist hierbei im Querschnitt gemäß Fig. 1 bevorzugt abgerundet oder ballig ausgebildet.

An dem Grundkörper 14 ist weiterhin eine Führungsfläche 58 ausgebildet, welche in Richtung der Innenseite der Deckwand 20 weist, wobei diese Innenseite der Deckwand 20 als erste Anlagefläche 60 definiert ist. Die Führungsfläche 58 ist hierbei so gestaltet, dass sie zu der ersten Anlagefläche 60 nicht parallel verläuft, sondern mit dieser einen spitzen Winkel einschließt. Im zeichnerisch dargestellten Ausführungsbeispiel wird dies dadurch realisiert, dass der Grundkörper 14 zwischen den beiden Vorsprüngen 36 und 38 zwei parallel zueinander verlaufende unterschiedlich hohe Führungsleisten 62 und 64 aufweist. In der Schnittdarstellung gemäß Fig. 3 ist hierbei die linke Führungsleiste 62 von geringerer Höhenerstreckung als die rechte Führungsleiste 64, das heißt, wenn das obere freie Ende der Führungsleiste 64 (entsprechend einem Teil der Führungsfläche 58) an der ersten Anlagefläche 60 anliegt, ist das obere freie Ende der Führungsleiste 62 (ebenfalls entsprechend einem Teil der Führungsfläche 58) von der gegenüberliegenden ersten Anlagefläche 60 um eine Abstand h beabstandet.

Die erste Schenkelkante 46 des Hebelelements 42 dient als eine erste Druckfläche 66 und das Ende des Vorsprungs 56 am Hebelelement 42 dient als zweite Druckfläche 68.

Zur Verbindung der beiden Bauteile 4 und 6 miteinander wird das Bauteil 4 mit seinem Haltebock 12 in das offene Ende des Bauteils 6 eingeschoben, wobei das Bauteil 4 und das Bauteil 6 zueinander in der Seitenansicht von Fig. 1 leicht abgeknickt sind, so dass das obere freie Ende des Haltezapfens 36 entlang der ersten Anlagefläche 60 im Inneren des Bauteils 6 gleiten kann, bis der erste Haltezapfen 36 in der Öffnung 26 zu liegen kommt. Im Wesentlichen gleichzeitig hiermit gelangt der zweite Haltezapfen 38 in Eingriff mit der Öffnung oder Kerbe 24 in der Deckwand 20.

Durch ein in die Öffnung 50 eingestecktes Werkzeug wird die Stellschraube 34 in die Muffe 32 und damit das Innere des Bauteils 6 gedreht, so dass über die Stellschraube 34 Druck auf die erste Schenkelkante 46 bzw. die erste Druckfläche 66 ausgeübt wird. Dieser Druck bedingt eine Schwenkbewegung des Hebelelements 42 in Fig. 1 entgegen Uhrzeigersinn, wobei die Rundkante 52 auf dem Gegenprofil 54 abgleitet. Die Schwenkbewegung erfolgt hierbei unter Abstützung des Vorsprungs 56 bzw. der zweiten Druckfläche 68 an einer zweiten Anlagefläche 69 an der Innenseite der Bodenwand 22, wobei aufgrund der unterschiedlichen Abstände zwischen Vorsprung 56 bzw. zweiter Druckfläche 68 und einer durch den Punkt S verlaufenden Linie und dem Angriffspunkt der Stellschraube 34 an der ersten Schenkelkante 46 bzw. der ersten Druckfläche 66 und der durch den Punkt S verlaufenden Linie eine Hebelwirkung und damit eine Kraftverstärkung vorliegt. Diese nach dem Hebelprinzip verstärkte Kraft wird von dem Hebelelement 42 über das Gegenprofil 54 auf den Grundkörper 14 und damit die beiden Führungsleisten 62 und 64 weitergeleitet, wobei aufgrund der unterschiedlichen Höhenerstreckung der beiden Führungsleisten 62 und 64 die in Fig. 3 rechts liegende Führungsleiste 64 als erste mit der ersten Anlagefläche 60 in Anlage gelangt. Eine weitere Zustellbewegung der Stellschraube 34 bewirkt nunmehr eine Verkippung des Grundkörpers 14 bzw. des Haltebocks 12 im Inneren des Bauteils 6 in Richtung des Pfeils in Fig. 3, so dass sich das obere freie Ende der Führungsleiste 62 an die ersten Anlagefläche 60 annähert.

Diese Verkippbewegung des Grundkörpers 14 und damit des Bauteils 4 gegenüber dem Bauteil 6 wird erleichtert durch eine komplementär/ballige oder bogenförmige Ausbildung der Fläche zwischen Rundkante 52 und Gegenprofil 54, d.h. diese Fläche ist in Axialrichtung (Richtung senkrecht zur Zeichenebene von Fig. 1) gerundet. Dies bedingt eine entsprechende Ausbildung von Rundkante 52 und Gegenprofil 54 als konkav/konvex oder konvex/konkav, wobei die Ausbildung konvex/konkav (Rundkante 52/Gegenprofil 54) in Fig. 3 dargestellt ist.

Im Zuge der Verschwenkung des Grundkörpers 14 oder Halteblocks 12 im Inneren des Bauteils 6 erfolgt eine Verkantung im Bereich einer unteren freien Kante 70 zwischen der Seiteninnenwand 18a des Bauteils 6 und dem Grundkörper 14, so dass durch diese Verkantung oder Linienpressung die beiden Bauteile 4 und 6 ineinander verspannt sind.

Durch den Eingriff des Vorsprungs oder Haltezapfens 36 in der Nut 26 kann der Grundkörper 14 gegenüber dem Stutzen 8 keine oder nur eine unwesentliche Bewegung in Axialrichtung durchführen, so dass der Einspann- oder Anziehvorgang durch die Stellschraube 34 nicht durch etwaige Ausweichbewegungen des Grundkörpers 14 gegenüber dem Stutzen 8 abgeschwächt oder gar zunichte gemacht wird. Die Verkippung oder Schrägstellung des Grundkörpers 14 gegenüber dem Stutzen 8 (Bauteil 4 gegenüber dem Bauteil 6) zur Erzielung des angestrebten Klemm- und Halteeffekts wird durch den Eingriff von Haltezapfen 36 und Nut 26 dagegen nicht behindert.

Zum Lösen der Verbindung zwischen den Bauteilen 4 und 6 genügt es; durch ein Herausdrehen der Stellschraube 34 die auf das Hebelelement 42 aufgebrachte Kraft aufzuheben, so dass die Verkippung oder Verkantung des Bauteils 4 gegenüber dem Bauteil 6 aufgehoben wird, wonach bei Bedarf das Bauteil 4 aus dem Bauteil 6 herausgezogen werden kann.

Eine entsprechende Längsdimensionierung der Öffnungen 24 und 26 vorausgesetzt, kann hierdurch auch das Bauteil 4 gegenüber dem Bauteil 6 über eine bestimmten, durch die Erstreckung der Öffnungen 24 und 26 bestimmten Betrag stufenlos verstellt werden.

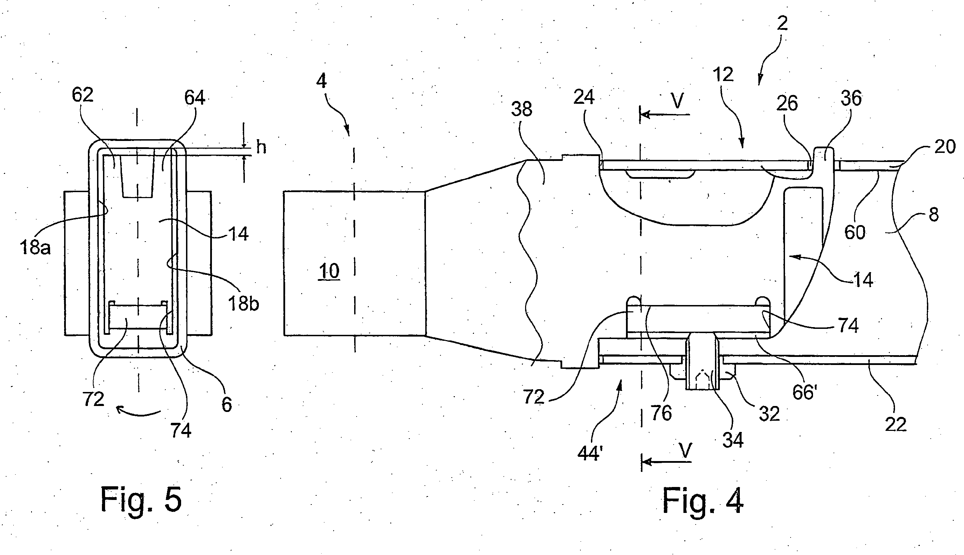

Fig. 4 zeigt in einer Fig. 1 entsprechenden Darstellung eine zweite Ausgestaltungsform eines erfindungsgemäßen Verbindungssystems 2, wobei gleiche öder einander entsprechenden bzw. in ihrer Funktion vollständig oder im Wesentlichen äquivalente Abschnitte oder Teile mit gleichen Bezugszeichen wie in Fig. 1 bezeichnet sind. Gleiches trifft auf die Schnittdarstellung von Fig. 5 mit Blick auf Fig. 3 zu.

Das System 2 gemäß Fig. 4 weist im wesentlichen Unterschied zur Ausgestaltungsform von Fig. 1 eine Druckplatte 72 auf, welche in der aus den Figuren 4 und 5 ersichtlichen Weise in einer Aufnahmevertiefung 74 aufgenommen ist, welche in dem Grundkörper 14 ausgebildet ist. Die Druckplatte 72 kann hierbei entweder - wie in den Fig. 4 und 5 gezeigt - als ein vom Grundkörper 14 separates Bauteil ausgeführt sein, oder sie kann aus dem Material des Grundkörpers 14 durch beispielsweise eine partielle Oberflächenvergütung, z. B, eine Härtung geformt werden. Die Druckplatte 72 definiert an ihrer dem Grundkörper 14 abgewanden Oberfläche die erste Druckfläche 66', an der die Stellschraube 34 mit Ihrem freien Ende anliegt.

Ist die Druckplatte 72 als separates Bauteil ausgeführt und in der Aufnähmevertiefung 74 gehalten, kann eine der beiden Anlageflächen zwischen Druckplatte 72 und Grundkörper 14 eben und die andere ballig oder sonst wie von der Ebenenform abweichend, z.B. mit einem Vorsprung oder einer Leiste/Rippe ausgebildet sein, beispielsweise eine Gegenfläche 76, weiche den Grund der Aufnahmevertiefung 74 bildet. Hierdurch ist die Druckplatte 72 unter der Voraussetzung, dass sie mit ausreichend Spiel in der Aufnahmevertiefung 74 aufgenommen ist, in der Lage, beschränkte Kippbewegungen in einer Ebene parallel zur Längsachse L (Fig. 2) durchzuführen. Derartige Kippbewegungen können einen Schrägstellung des Grundkörpers 14 und damit eine Verkantung zur Lagefixierung unterstützen, wenn durch Anziehen der Stellschraube 34, wobei Druck auf die Druckfläche 66' ausgeübt wird, der Grundkörper 14 in Fig. 5 angehoben wird, sodass auf Grund der Höhendifferenz h der Grundkörper 14 sich im Inneren des Verbindungselements 6 schrägstellt.

Die weiter oben getroffenen Aussagen hinsichtlich Funktion, Wirkungsweise und Vorteile betreffend die erste Ausführungsform der Fig. 1 bis 3 treffen auf die Ausführungsform gemäß den Fig. 4 und 5 gleichermaßen oder in analoger Weise zu, sodass eine nochmalige Erläuterung hiervon nicht erfolgt.

Das erfindungsgemäße Verbindungssystem 2 zeichnet sich durch robusten und zuverlässigen Aufbau, einfache Handhabbarkeit, Vibrationssicherheit und ästhetisches Erscheinungsbild aus, da die einzigen nach außen hin sichtbaren Elemente des Verbindungssystems 2 das durch die Öffnung 26 ragende freie Ende des ersten Haltezapfens 36 und auf der gegenüberliegenden Seite die Stellschraube 34 bzw. deren Muffe 32 sind. Der gesamte Klemmmechanismus, insbesondere das Hebelelement 42 mit seiner Rundkante 52 und dem Gegenprofil 54 befinden sich geschützt im Inneren des Bauteils 6 und sind somit weitestgehend vor Staub, Witterungseinflüssen etc. geschützt.

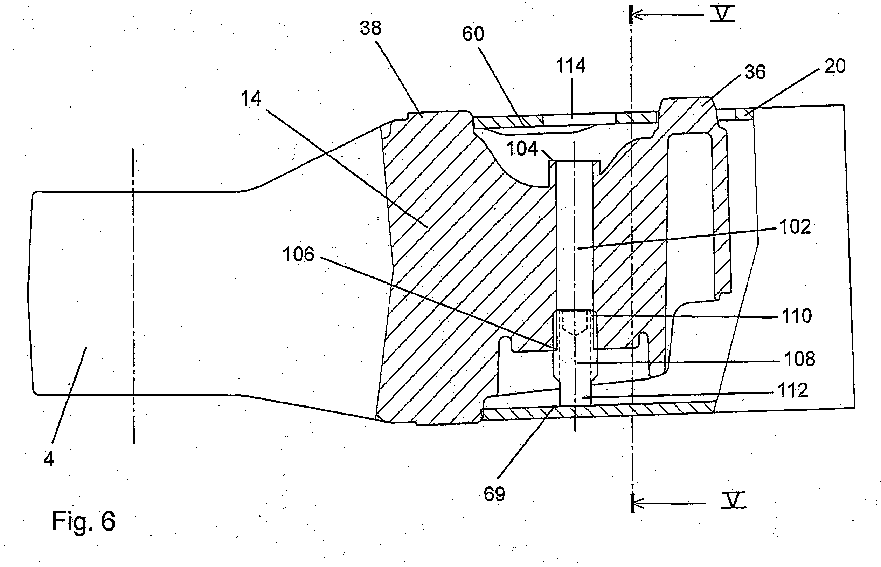

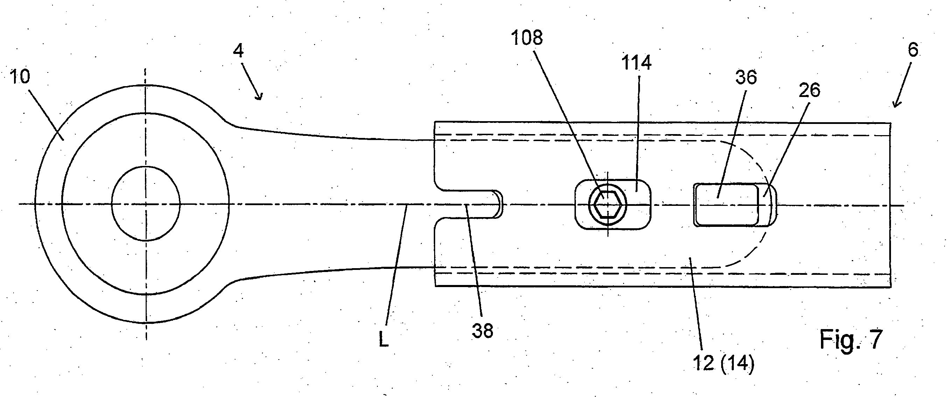

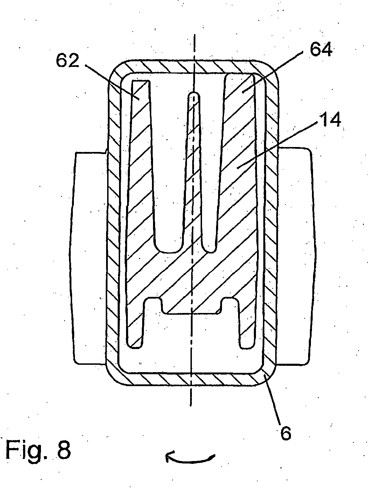

Figuren 6 bis 8 zeigen eine dritte Ausführungsform der Erfindung, die sich von der ersten und zweiten Ausführungsform durch die unterschiedliche Ausgestaltung der Klemmeinrichtung 100 unterscheidet. Die unveränderten Komponenten werden mit den gleichen Bezugszeichen wie in den Figuren 1 bis 5 bezeichnet.

Die Klemmeinrichtung 100 umfasst ein sich in Richtung zwischen Deckwand 20 und Bodenwand 22 erstreckendes, den Haltebock 14 durchsetzendes Schraubloch 102, das ein oberes, der Deckwand 20 zugewandtes Ende 104, und ein unteres, der Bodenwand 22 zugewandtes Ende 106. In das Schraubloch 102 ist eine Klemmschraube 108 in Form einer Madenschraube mit einem Schraubkopf 110 und einem Schraubfuß 112 eingeschraubt. Der Schraubfuß 112 ragt über das untere Ende 106 des Schraublochs 102 hinaus und stützt sich auf der zweiten Anlagefläche 69 auf der Innenseite der Deckwand 22 ab. Über dem oberen Ende 104 des Schraublochs 102 ist im Bereich der ersten Anlagefläche 60 eine den Stutzen 8 durchsetzende Eingriffsöffnung 114 vorgesehen, durch die mit einem Werkzeug auf die Madenschraube 108 zugegriffen werden kann. Bei der ersten und zweiten Ausführungsform der Erfindung erfolgt die Betätigung der Klemmeinrichtung 44 bzw. 44' durch die Öffnung 30 mit Muffe 32 und Schraube 34 in der Bodenwand 22 des Stutzens 8, während bei der dritten Ausführungsform die Betätigung der Klemmeinrichtung 100 über die Eingriffsöffnung 114 in der Deckwand 20 des Stutzens 8 erfolgt.

Es versteht sich, dass die vorstehende Beschreibung bevorzugter Ausführungsformen als rein illustrativ und nicht einschränkend zu werten ist. So ist insbesondere die Ausgestaltung des Klemmmechanismus, mit dem die Verkantung und damit Verkrallung der beiden Bauteile 4 und 6 zueinander hervorgerufen und aufrechterhalten werden kann, nicht auf das dargestellte Ausführungsbeispiel mit dem sektorförmigen Hebelelement 42 beschränkt. Auch können von der dargestellten langgestreckt/rechteckförmigen Querschnittsform abweichende Querschnittsformen für die Bauteile 4 und 6 gewählt werden, solang gewährleistet ist, dass über einen entsprechenden Mechanismus eine Verkantung oder Verklemmung der beiden Bauteile 4 und 6 ineinander im Sinne der vorliegenden Erfindung hervorgerufen und aufrechterhalten werden kann.

### Bezugszeichenliste:

- 2: Verbindungssystem
- 4: zweites Bauteil
- 6: erstes Bauteil
- 8: rohrförmiger Stutzen von 6
- 10: Aufnahme an 4
- 12: Haltebock
- 14: Grundkörper von 12
- 16a, 16b: vertikale Seitenwände von 14
- 18a, 18b: vertikale, innere Seitenwände von 8
- 20: Deckwand von 8
- 22: Bodenwand von 8
- 24: schlitzförmige Öffnung in 20
- 26: Öffnung, Langloch in 20
- 28: freier Rand von 8
- 30: Öffnung in 22
- 32: Muffe
- 34: Stellschraube in 30
- 36: erster Haltezapfen an 14
- 38: zweiter Haltezapfen an 14
- 40: Aufnahmekammer in 14 für Hebelelement 42
- 42: Hebelelement
- 44: Klemmeinrichtung
- 46: erste Schenkelkante von 42
- 48: zweite Schenkelkante von 42
- 50: Werkzeugöffnung in 34
- 52: bogenförmig Rundkante von 42
- 54: Gegenprofil zu 52 in 14
- 56: Vorsprung an 42
- 58: Führungsfläche an 14
- 60: erste Anlagefläche an 8
- 62: linke, niedrige Führungsleiste
- 64: rechte, hohe Führungsleiste
- 66: Druckfläche (entspricht Schenkelkante 46)
- 68: zweite Druckfläche (bzw. Ende des Vorsprungs 56)
- 69: zweite Anlagefläche
- 70: untere freie Kante von 14
- 72: Druckplatte
- 74: Aufnahmevertiefung

- 100: Klemmeinrichtung
- 102: Schraubloch in 14
- 104: oberes Ende von 102
- 106: unteres Ende von 102
- 108: Klemmschraube, Madenschraube
- 110: Schraubkopf
- 112: Schraubfuß
- 114: Eingriffsöffnung in 8

## Patentansprüche

1. System zur Verbindung von zwei Bauteilen mit
einem ersten Bauteil (6) mit einem zumindest einseitig offenen, rohrförmigen Stutzen (8),
wobei in dem Stutzen (8) eine erste Anlagefläche (60) und eine erste Nut (26) vorgesehen ist,
einem zweiten Bauteil (4) mit einem in den rohrförmigen Stutzen (8) mit Spiel einführbaren Haltebock (12),
wobei der Haltebock (12) einen Grundkörper (14) umfasst,
wobei an dem Grundkörper (14) ein erster Haltezapfen (36) zum Eingriff in die erste Nut (26) und eine in Einführrichtung hinter dem ersten Haltezapfen (36) angeordnete Führungsfläche (58) vorgesehen ist,
wobei die Führungsfläche (58) der ersten Anlagefläche (60) zugeordnet und zu dieser in spitzem Winkel geneigt ist, und
einer Klemmeinrichtung (44; 44') mit einer Schraube (34), welche den Stutzen (8) an der der ersten Anlagefläche (60) gegenüberliegenden Seite (22) durchsetzt und eine erste Druckfläche (66; 66') auf dem Grundkörper (14) des Haltebocks (12) derart kontaktiert, dass bei Betätigung der Schraube (34) die geneigte Führungsfläche (58) gegen die erste Anlagefläche (60) gedrückt und damit der Haltebock (12) in dem Stutzen (8) verkantet wird.

2. System nach Anspruch 1, **dadurch gekennzeichnet,**
**dass** die Klemmeinrichtung (44) ein Hebelelement (42) mit einem ersten und einem zweiten Hebelarm umfasst,
**dass** der erste Hebelarm länger als der zweite Hebelarm ist,
**dass** an dem ersten, längeren Hebelarm die erste Druckfläche (66) und an dem zweiten, kürzeren Hebelarm eine zweite Druckfläche (68) ausgebildet ist, und
**dass** in dem Stutzen (8), der zweiten Druckfläche (68) gegenüberliegend, eine zweite Anlagefläche (69) ausgebildet ist.

3. System nach Anspruch 2, **dadurch gekennzeichnet,**
**dass** das Hebelelement (42) die Grundform eines Kreissektors mit einer ersten (46) und einer zweiten Schenkelkante (48) und einer die beiden Schenkelkanten verbindenden Rundkante (52) aufweist,
**dass** die erste Druckfläche (66) auf der ersten Schenkelkante (46) nahe der Rundkante (52) angeordnet ist,
**dass** die zweite Druckfläche (68) auf einem Vorsprung (56) vorgesehen ist, der auf der ersten Schenkelkante (46) nahe dem Zusammentreffen der beiden Schenkelkanten (46, 48) angeordnet ist;
**dass** die Rundkante (52) in axialer Richtung gerundet ist, und
**dass** das Hebelelement (42) in einer entsprechend geformten Ausnehmung (40) in dem Grundkörper (14) beweglich angeordnet ist.

4. System nach Anspruch 2 oder 3, **dadurch gekennzeichnet, dass** die Klemmeinrichtung (44') eine in dem Grundkörper (14) angeordnete oder ausgebildete Druckplatte (72) umfasst, deren dem Grundkörper abgewandte Oberfläche die erste Druckfläche (66') definiert, welche die Schraube (34) kontaktiert.

5. System nach Anspruch 4, **dadurch gekennzeichnet, dass** die Druckplatte (72) als von dem Grundkörper (14) separates Bauteil ausgeführt ist.

6. System nach Anspruch 5, **dadurch gekennzeichnet, dass** die Druckplatte (72) in einer Aufnahmevertiefung (74) seitens des Grundkörpers (14) angeordnet und in einer Ebene parallel zur Längsachse (L) des ersten Bauteils (6) verkippbar ist.

7. System nach Anspruch 5 oder 6, **dadurch gekennzeichnet, dass** sich die Druckplatte (72) an einer ballig ausgebildeten Gegenfläche (76) seitens des Grundkörpers (14) abstützt.

8. System zur Verbindung von zwei Bauteilen, mit
einem ersten Bauteil (6) mit einem zumindest einseitig offenen, rohrförmigen Stutzen (8),
wobei auf der Innenseite des Stutzens (8) eine erste Anlagefläche (60) und eine erste Nut (26) und der ersten Anlagefläche (60) gegenüberliegend eine zweite Anlagefläche (69) vorgesehen ist,
einem zweiten Bauteil (4) mit einem in den rohrförmigen Stutzen (8) mit Spiel einführbaren Haltebock (12),
wobei der Haltebock (12) einen Grundkörper (14) umfasst,
wobei an dem Grundkörper (14) ein erster Haltezapfen (36) zum Eingriff in die erste Nut (26) und eine vorzugsweise in Einführrichtung hinter dem ersten Haltezapfen (36) angeordnete Führungsfläche (58) vorgesehen ist,
wobei die Führungsfläche (58) der ersten Anlagefläche (60) zugeordnet ist und wobei die Führungsfläche (58) zu der ersten Anlagefläche (60) beim Einführen des Haltebocks (12) in den Stutzen (8) in spitzem Winkel geneigt ist, und
einer Klemmeinrichtung (100), die eine Klemmschraube (108) mit einem Schraubkopf (110) und einem Schraubfuß (112) umfasst, der in einem Schraubloch (102) in dem Grundkörper (14) des Haltebocks (12) angeordnet ist, wobei der Schraubfuß (112) bei Betätigung der Klemmschraube (108) gegen die zweite Anlagefläche (69) in dem Stutzen (8) drückt, die geneigte Führungsfläche (58) gegen die erste Anlagefläche (60) drückt und damit den Haltebock (12) in dem Stutzen (8) verkantet, wobei die Klemmeinrichtung (100) durch eine Eingriffsöffnung (114) betätigbar ist, die den Stutzen (8) im Bereich der ersten Anlagefläche (60) durchsetzt.

9. System nach Anspruch 8, **dadurch gekennzeichnet, dass** die Klemmschraube (108) eine Madenschraube ist.

10. System nach Anspruch 8 oder 9, **dadurch gekennzeichnet, dass** der Schraubfuß (112) der Klemmschraube (108) gegen die zweite Anlagefläche (69) drückt.

11. System nach einem der vorhergehenden Ansprüche, **dadurch gekennzeichnet, dass** die Führungsfläche (58) zu der ersten Anlagefläche (60) beim Einführen des Haltebocks (12) in den Stutzen (8) in spitzem Winkel quer zu der Einführrichtung geneigt ist.

12. System nach Anspruch 11, **dadurch gekennzeichnet, dass** die geneigte Führungsfläche (58) durch zwei parallel zueinander verlaufende, hinter dem ersten Haltezapfen (36) angeordnete, unterschiedlich hohe Führungsleisten (62, 64) ausgebildet ist.

13. System nach einem der vorhergehenden Ansprüche, **dadurch gekennzeichnet, dass** der Haltebock (12) wenigstens einen zweiten Haltezapfen (38) umfasst, der in eine zugeordnete zweite Nut (24) in dem Stutzen (8) eingreift.

14. System nach einem der vorhergehenden Ansprüche, **dadurch gekennzeichnet, dass** die die wenigstens zwei Nuten (24, 26) als durchgehende Öffnungen in dem Stutzen (8) ausgebildet sind.

15. System nach Anspruch 13 oder 14, **dadurch gekennzeichnet, dass** die zweite Nut (24) als Einkerbung in dem Stutzen (8) ausgebildet ist.

16. System nach einem der Ansprüche 13 bis 15, **dadurch gekennzeichnet, dass** die Führungsfläche (58) zwischen den beiden Haltezapfen (36, 38) angeordnet ist.

17. System nach einem der vorhergehenden Ansprüche, **dadurch gekennzeichnet, dass** der Stutzen (8) ein Vierkantrohr ist.

18. Haltebock für ein System nach einem der Ansprüche 1 bis 17, mit
einem Grundkörper (14);
einem an dem Grundkörper (14) angeformten ersten Haltezapfen (36) zum Eingriff in eine erste zugeordnete Nut (26); und
zwei parallel zueinander verlaufenden, hinter dem ersten Haltezapfen (36) angeordneten, unterschiedlich hohen Führungsleisten (62, 64).

19. Haltebock nach Anspruch 18, **dadurch gekennzeichnet, dass** auf der den Führungsleisten (62, 64) gegenüberliegenden Seite des Grundkörpers (14) eine erste Druckfläche (66) ausgebildet ist.

20. Haltebock nach Anspruch 19, **gekennzeichnet durch** ein Hebelelement (42) mit der Grundform eines Kreissektors, der eine erste und eine zweite Schenkelkante (46, 48) und eine die beiden Schenkelkanten verbindenden Rundkante (52) aufweist, wobei
das Hebelelement (42) einen ersten, längeren und einem zweiten, kürzeren Hebelarm umfasst, wobei die erste Druckfläche (66) am Ende des ersten Hebelarms auf der ersten Schenkelkante (46) nahe der Rundkante (52) angeordnet ist;
eine zweite Druckfläche (68) am Ende des zweiten Hebelarms auf einem Vorsprung (56) vorgesehen ist, der aus der ersten Schenkelkante nahe dem Zusammentreffen der beiden Schenkelkanten angeordnet ist;
die Rundkante (52) in axialer Richtung gerundet ist; und
das Hebelelement (42) in einer entsprechend geformten Ausnehmung (40) in dem Grundkörper (14) beweglich angeordnet ist.

21. Haltebock nach Anspruch 19 oder 20, **dadurch gekennzeichnet, dass** die Rundkante (52) eine durchlaufende Nut aufweist, in die ein komplementär an dem Grundkörper (14) angeformter Vorsprung mit Spiel eingreift.

22. Haltebock nach einem der Ansprüche 18 bis 21, **dadurch gekennzeichnet, dass** an dem Grundkörper (14) eine Druckplatte (72) angeordnet oder ausgebildet ist, deren dem Grundkörper abgewandte Oberfläche die erste Druckfläche (66') definiert, welche die Schraube (34) kontaktiert.

23. Haltebock nach Anspruch 18, **dadurch gekennzeichnet, dass** der Grundkörper von einem Schraubloch durchsetzt ist, in dem eine Klemmschraube eingeschraubt ist.

24. Spiegelanordnung für Kraftfahrzeuge mit einer Tragstruktur, an dessen einem Ende wenigstens ein Spiegelkopf und an dessen anderem Ende wenigstens ein Haltebock (12) nach wenigstens einem der vorhergehenden Ansprüche 18 bis 23 vorgesehen ist.

## Claims

1. A system for the connection of two components, comprising
a first component (6) including a tubular flange member (8) which is open on at least one side,
a first contact surface (60) and a first groove (26) being provided inside the flange member (8),
a second component (4) including a mounting member (12) adapted to be inserted with play into the tubular flange member (8),
the mounting member (12) including a base body (14),
wherein on the base body (14), a first retaining boss (36) for engagement in the first groove (26) and a guide surface (58) arranged behind the retaining boss (36) in the direction of insertion are provided,
wherein the guide surface (58) is associated with the first contact surface (60) and inclined at an acute angle relative to the latter, and
a clamping means (44; 44') comprising a screw (34) which passes through the flange member (8) on the side (22) facing the first contact surface (60) and which contacts a first pressure surface (66; 66') on the base body (14) of the mounting member (12) in such a way that when the screw (34) is actuated, the inclined guide surface (58) is pressed against the first contact surface (60),and thus the mounting member (12) is jammed inside the flange member (8).

2. The system according to claim 1, **characterized in that**
the clamping means (44) comprises a lever member (42) having a first and a second lever arm,
the first lever arm is longer than the second lever arm,
the first pressure surface (66) is formed on the first, longer lever arm and a second pressure surface (68) is formed on the second, shorter lever arm, and
inside the flange member (8), a second contact surface (69) is formed so as to face the second pressure surface (68).

3. The system according to claim 2, **characterized in that**
the lever member (42) has the basic shape of a circular sector having a first (46) and a second leg edge (48) and a round edge (52) interconnecting the two leg edges,
the first pressure surface (66) is arranged on the first leg edge (46) near the round edge (52),
the second pressure surface (68) is provided on a projection (56) which is arranged on the first leg edge (46) near the point where the two leg edges (46, 48) meet;
the round edge (52) is rounded in an axial direction, and
the lever member (42) is movably arranged in a correspondingly shaped recess (40) in the base body (14).

4. The system according to claim 2 or 3, **characterized in that** the clamping means (44') comprises a pressure plate (72) arranged or formed in the base body (14), whose surface facing away from the base body defines the first pressure surface (66') which contacts the screw (34).

5. The system according to claim 4, **characterized in that** the pressure plate (72) is realized as a component separate from the base body (14).

6. The system according to claim 5, **characterized in that** the pressure plate (72) is arranged in a receiving depression (74) on the side of the base body (14) and is adapted to be tilted in a plane in parallel with the longitudinal axis (L) of the first component (6).

7. The system according to claim 5 or 6, **characterized in that** the pressure plate (72) is supported on a spherically shaped countersurface (76) on the part of the base body (14).

8. A system for the connection of two components, comprising
a first component (6) including a tubular flange member (8) which is open on at least one side,
wherein on the inner side of the flange member (8), a first contact surface (60) and a first groove (26) and a second contact surface (69) facing the first contact surface (60) are provided,
a second component (4) including a mounting member (12) adapted to be introduced with play into the tubular flange member (8),
the mounting member (12) including a base body (14),
wherein on the base body (14), a first retaining boss (36) for engagement in the first groove (26) and a guide surface (58) preferably arranged behind the retaining boss (36) in the direction of introduction are provided,
wherein the guide surface (58) is associated with the first contact surface (60), and during introduction of the mounting member (12) into the flange member (8), the guide surface (58) is inclined at an acute angle relative to the first contact surface (60), and
a clamping means (100) which includes a clamping screw (108) having a screw head (110) and a screw foot (112), which is arranged in a screw hole (102) in the base body (14) of the mounting member (12), wherein, upon actuation of clamping screw (108), the screw foot (112) presses against the second contact surface (69) in the flange member (8), presses the inclined guide surface (58) against the first contact surface (60), to thus jam the mounting member (12) inside the flange member (8), wherein the clamping means (100) may be actuated through an access opening (114) which penetrates the flange member (8) in the area of the first contact surface (60).

9. The system according to claim 8, **characterized in that** the clamping screw (108) is a stud screw.

10. The system according to claim 8 or 9, **characterized in that** the screw foot (112) of the clamping screw (108) presses against the second contact surface (69).

11. The system according to any one of the preceding claims, **characterized in that** the guide surface (58) is tilted relative to the first contact surface (60) at an acute angle in a direction transverse to the direction of introduction when the mounting member (12) is introduced into flange member (8).

12. The system according to claim 11, **characterized in that** the inclined guide surface (58) is formed by two guide strips (62, 64) of different height which run in parallel behind the first retaining boss (36).

13. The system according to any one of the preceding claims, **characterized in that** the mounting member (12) includes at least one second retaining boss (38) which engages an associated second groove (24) in the flange member (8).

14. The system according to any one of the preceding claims, **characterized in that** the at least two grooves (24, 26) have the form of continuous openings in the flange member (8).

15. The system according to claim 13 or 14, **characterized in that** the second groove (24) has the form of a notch in the flange member (8).

16. The system according to one of claims 13 to 15, **characterized in that** the guide surface (58) is arranged between the two retaining bosses (36, 38).

17. The system according to any one of the preceding claims, **characterized in that** the flange member (8) is a rectangular tube.

18. A mounting member for a system according to any one of claims 1 to 17, comprising
a base body (14);
a first retaining boss (36) formed on the base body (14) for engagement in a first associated groove (26); and
two guide strips (62, 64) of different height running in parallel behind the first retaining boss (36).

19. The mounting member according to claim 18, **characterized in that** a first pressure surface (66) is formed on the side of the base body (14) facing the guide strips (62, 64).

20. The mounting member according to claim 19, **characterized by** a lever member (42) having the basic shape of a circular sector which connects a first and a second leg edge (46, 48) and a round edge (52) interconnecting the two leg edges, wherein
the lever member (42) includes a first, longer lever arm and a second, shorter lever arm, the first pressure surface (66) being arranged at the end of the first lever arm on the first leg edge (46) near the round edge (52);
a second pressure surface (68) is provided at the end of the second lever arm on a projection (56) which is arranged on the first leg edge near the point where the two leg edges meet;
the round edge (52) is rounded in an axial direction; and
the lever member (42) is movably arranged in a correspondingly shaped recess (40) in the base body (14).

21. The mounting member according to claim 19 or 20, **characterized in that** the round edge (52) has a continuous groove which is engaged with play by a projection formed complementarily on the base body (14).

22. The mounting member according to one of the claims 18 to 21, **characterized in that** on the base body (14), a pressure plate (72) is arranged or formed, whose surface facing away from the base body defines the first pressure surface (66') which contacts the screw (34).

23. The mounting member according to claim 18, **characterized in that** the base body is penetrated by a screw hole into which a clamping screw is screwed.

24. A mirror assembly for automotive vehicles comprising a supporting structure, on the one end of which at least one mirror head is provided and on the other end of which at least one mounting member (12) according to at least one of the preceding claims 18 to 23 is provided.

## Revendications

1. Système pour relier deux composants, avec
un premier composant (6) avec une tubulure tubulaire (8) ouverte au moins sur un côté,
dans lequel on prévoit, dans la tubulure (8), une première surface d'appui (60) et une première rainure (26),
un deuxième composant (4) avec un support de maintien (12) insérable avec du jeu dans la tubulure (8) tubulaire,
dans lequel le support de maintien (12) comprend un corps de base (14),
dans lequel on prévoit, sur le corps de base (14), un premier tenon de maintien (36) pour l'engrènement dans la première rainure (26) et une surface de guidage (58) disposée en direction d'insertion derrière le premier tenon de maintien (36),
dans lequel la surface de guidage (58) est associée à la première surface d'appui (60) et est inclinée selon un angle aigu par rapport à cette dernière, et
un dispositif de serrage (44 ; 44') avec une vis (34) qui traverse la tubulure (8) sur le côté (22) situé en vis-à-vis de la première surface d'appui (60) et entre en contact avec une première surface de pression (66 ; 66') sur le corps de base (14) du support de maintien (12) de telle sorte qu'en cas d'actionnement de la vis (34), la surface de guidage (58) inclinée est pressée contre la première surface d'appui (60) et le support de maintien(12) étant de la sorte coincé dans la tubulure (8).

2. Système selon la revendication 1, **caractérisé en ce que**
le dispositif de serrage (44) comprend un élément de levier (42) avec un premier et un deuxième bras de levier,
**en ce que** le premier bras de levier est plus long que le deuxième bras de levier,
**en ce que** la première surface de pression (66) est formée sur le premier bras de levier plus long et **en ce qu'**une deuxième surface de pression (68) est formée sur le deuxième bras de levier plus court, et
**en ce que**, dans la tubulure (8), de manière située en vis-à-vis de la deuxième surface de pression (68), une deuxième surface d'appui (69) est formée.

3. Système selon la revendication 2, **caractérisé en ce que**
l'élément de levier (42) présente la forme de base d'un secteur de cercle avec un premier (46) et un deuxième bord coudé (48) et un bord arrondi (52) reliant les deux bords coudés,
**en ce que** la première surface de pression (66) est disposée sur le premier bord coudé (46) à proximité du bord arrondi (52),
**en ce que** la deuxième surface de pression (68) est prévue sur une saillie (56), laquelle est disposée sur le premier bord coudé (46) à proximité de la jonction entre les deux bords coudés (46, 48) ;
**en ce que** le bord arrondi (52) est arrondi en direction axiale, et
**en ce que** l'élément de levier (42) est disposé de manière mobile dans un évidement (40) formé de manière correspondante dans le corps de base (14).

4. Système selon la revendication 2 ou 3, **caractérisé en ce que** le dispositif de serrage (44') comprend une plaque de pression (72) disposée ou formée dans le corps de base (14), dont la surface tournant le dos au corps de base définit la première surface de pression (66') qui entre en contact avec la vis (34).

5. Système selon la revendication 4, **caractérisé en ce que** la plaque de pression (72) est réalisée en tant que composant distinct du corps de base (14).

6. Système selon la revendication 5, **caractérisé en ce que** la plaque de pression (72) est disposée dans un renfoncement de logement (74) du côté du corps de base (14) et peut basculer dans un plan parallèle à l'axe longitudinal (L) du premier composant (6).

7. Système selon la revendication 5 ou 6, **caractérisé en ce que** la plaque de pression (72) est en appui sur une surface antagoniste (76) réalisée de manière bombée du côté du corps de base (14).

8. Système pour relier deux composants, avec
un premier composant (6) avec une tubulure (8) tubulaire ouverte au moins sur un côté,
dans lequel on prévoit, sur le côté intérieur de la tubulure (8), une première surface d'appui (60) et une première rainure (26) et, de manière située en vis-à-vis de la première surface d'appui (60), une deuxième surface d'appui (69),
un deuxième composant (4) avec un support de maintien (12) insérable avec du jeu dans la tubulure (8) tubulaire,
dans lequel le support de maintien (12) comprend un corps de base (14),
dans lequel on prévoit, sur le corps de base (14), un premier tenon de maintien (36) pour l'engrènement dans la première rainure (26) et une surface de guidage (58) disposée de préférence en direction d'insertion derrière le premier tenon de maintien (36),
dans lequel la surface de guidage (58) est associée à la première surface d'appui (60) et dans lequel la surface de guidage (58) est inclinée par rapport à la première surface d'appui (60) selon un angle aigu lors de l'insertion du support de maintien (12) dans la tubulure (8), et
un dispositif de serrage (100) qui comprend une vis de serrage (108) avec une tête de vis (110) et un pied de vis (112), lequel est disposé dans un trou de vissage (102) dans le corps de base (14) du support de maintien (12), dans lequel, lors de l'actionnement de la vis de serrage (108), le pied de vis (112) presse contre la deuxième surface d'appui (69) dans la tubulure (8), la surface de guidage inclinée (58) pressant contre la première surface d'appui (60) et coinçant de la sorte le support de maintien (12) dans la tubulure (8), dans lequel le dispositif de serrage (100) est actionnable à travers une ouverture d'intervention (114) qui traverse la tubulure (8) dans la zone de la première surface d'appui (60).

9. Système selon la revendication 8, **caractérisé en ce que** la vis de serrage (108) est une vis sans tête.

10. Système selon la revendication 8 ou 9, **caractérisé en ce que** le pied de vis (112) de la vis de serrage (108) presse contre la deuxième surface d'appui (69).

11. Système selon l'une des revendications précédentes, **caractérisé en ce que** la surface de guidage (58) est inclinée selon un angle aigu par rapport à la première surface d'appui (60) lors de l'insertion du support de maintien (12) dans la tubulure (8), transversalement à la direction d'insertion.

12. Système selon la revendication 11, **caractérisé en ce que** la surface de guidage (58) inclinée est réalisée par deux baguettes de guidage (62, 64) de hauteurs différentes s'étendant parallèlement entre elles, disposées derrière le premier tenon de maintien (36).

13. Système selon l'une des revendications précédentes, **caractérisé en ce que** le support de maintien (12) comprend au moins un deuxième tenon de maintien (38), lequel s'engrène dans une deuxième rainure (24) associée dans la tubulure (8).

14. Système selon l'une des revendications précédentes, **caractérisé en ce que** ces au moins deux rainures (24, 26) sont réalisées en tant qu'ouvertures traversantes dans la tubulure (8).

15. Système selon la revendication 13 ou 14, **caractérisé en ce que** la deuxième rainure (24) est réalisée en tant qu'entaille dans la tubulure (8).

16. Système selon l'une des revendications 13 à 15, **caractérisé en ce que** la surface de guidage (58) est disposée entre les deux tenons de maintien (36, 38).

17. Système selon l'une des revendications précédentes, **caractérisé en ce que** la tubulure (8) est un tube carré.

18. Support de maintien pour un système selon l'une des revendications 1 à 17, avec
un corps de base (14) ;
un premier tenon de maintien (36) formé sur le corps de base (14) pour l'engrènement dans une première rainure (26) associée ; et
deux baguettes de guidage (62, 64) de hauteurs différentes s'étendant parallèlement entre elles, disposées derrière le premier tenon de maintien (36).

19. Support de maintien selon la revendication 18, **caractérisé en ce que**, sur le côté du corps de base (14) situé en vis-à-vis des baguettes de guidage (62, 64), une première surface de pression (66) est formée.

20. Support de maintien selon la revendication 19, **caractérisé par** un élément de levier (42) avec la forme de base d'un secteur de cercle qui présente un premier et un deuxième bord coudé (46, 48) et un bord arrondi (52) reliant les deux bords coudés, dans lequel
l'élément de levier (42) comprend un premier bras de levier plus long et un deuxième bras de levier plus court, dans lequel la première surface de pression (66) est disposée à l'extrémité du premier bras de levier sur le premier bord coudé (46) à proximité du bord arrondi (52) ;
une deuxième surface de pression (68) étant prévue à l'extrémité du deuxième bras de levier sur une saillie (56), laquelle est disposée sur le premier bord coudé à proximité de la jonction entre les deux bords coudés ;
le bord arrondi (52) étant arrondi en direction axiale ; et
l'élément de levier (42) étant disposé de manière mobile dans un évidement (40) formé de manière correspondante dans le corps de base (14).

21. Support de maintien selon la revendication 19 ou 20, **caractérisé en ce que** le bord arrondi (52) présente une rainure continue dans laquelle une saillie, formée de manière complémentaire sur le corps de base (14), s'engrène avec du jeu.

22. Support de maintien selon l'une des revendications 18 à 21, **caractérisé en ce qu'**une plaque de pression (72) est disposée ou formée sur le corps de base (14), dont la surface tournant le dos au corps de base définit la première surface de pression (66') qui entre en contact avec la vis (34).

23. Support de maintien selon la revendication 18, **caractérisé en ce que** le corps de base est traversé par un trou de vissage dans lequel une vis de serrage est vissée.

24. Agencement de miroir pour véhicules automobiles avec une structure de support à l'une des extrémités de laquelle est prévue au moins une tête de miroir et à l'autre extrémité de laquelle est prévu au moins un support de maintien (12) selon l'une au moins des revendications 18 à 23.
